# EUROPÄISCHE PATENTSCHRIFT

(11) **EP 1 794 769 B1**
(45) Veröffentlichungstag und Bekanntmachung des Hinweises auf die Patenterteilung: **11.06.2008**
(21) Anmeldenummer: 05777339.2
(22) Anmeldetag: 23.08.2005
(51) Int. Cl.: H01H 71/02

(54) **VERBINDUNGSSELEMENT ZUR HERSTELLUNG EINER VERBINDUNG ZWISCHEN INSTALLATIONSSCHALTGERÄTEN**
CONNECTOR ELEMENT FOR PRODUCING A CONNECTION BETWEEN INSTALLATION BREAKERS
ELEMENT D'ASSEMBLAGE PERMETTANT D'ASSEMBLER DES COMMUTATEURS D'INSTALLATION

(30) Priorität: 02.09.2004 DE 20413708 U
(43) Veröffentlichungstag der Anmeldung: 13.06.2007
(73) Patentinhaber: ABB AG, 68309 Mannheim (DE)
(72) Erfinder: SELLNER, Rudolf, 68766 Hockenheim (DE); BITZ, Matthias, 68789 St. Leon-Rot (DE)
(86) Internationale Anmeldenummer: PCT/EP2005/009090
(87) Internationale Veröffentlichungsnummer: WO 2006/024429

(56) Entgegenhaltungen:
- EP-A- 1 109 277
- DE-U1- 7 900 929

## Beschreibung

Die Erfindung betrifft ein Verbindungselement zum Verbinden zweier Installationsschaltgeräte gemäß dem Oberbegriff des Anspruchs 1,und eine Verbindung zwischen Installationsschaltgeräten gemäß dem Oberbegriff des Anspruchs 14.

Ein einpoliger elektrischer Leitungsschutzschalter oder FI-Schutzschalter besitzt ein Gehäuse, das schalenförmig ausgebildet ist, wobei die Stirnkanten der Schalenwände gegeneinander gelegt werden. Die Fixierung der beiden Schalen zueinander erfolgt beispielsweise mittels Nietverbindungen. Solche einpoligen Installationsschaltgeräte können zu mehrpoligen zusammengesetzt werden. Bekannt ist, die einzelnen Pole miteinander zu vernieten. Nietverbindungen sind jedoch technisch aufwendig.

Die EP 1 109 277 A2 beschreibt als Alternative zur Nietverbindung die Verbindung zweier Installationsschaltgeräte durch ein Verbindungselement, welches einen etwa zylinderförmigen Grundkörper mit einem ersten Außendurchmesser aufweist, an dessen Stirnseiten jeweils je zwei radial auffedernde, axial vorspringende, erste und zweite Spreizarme angeformt sind. Die Außenkonturen der Spreizarme liegen auf einer zylindrischen Mantelfläche, deren Außendurchmesser kleiner ist als der erste Außendurchmesser des Grundkörpers. Die freien Enden der Spreizarme weisen radial vorspringende Nasen auf, und zwar auf entgegengesetzte liegenden Mantellinien. Im montierten Zustand rasten die Nasen hinter Rücksprüngen an den mit dem Verbindungselement zu verbindenden Gehäusen der nebeneinanderliegenden Installationsschaltgeräte ein.

Aufgabe der Erfindung ist es, ein gattungsgemäßes Verbindungselement zu schaffen, mit dem der Verbindungsvorgang zweier miteinander zu verbindenden Installationsschaltgeräte deutlich vereinfacht und zuverlässiger herstellbar ist.

Weiterhin ist es Aufgabe der Erfindung, eine einfache und zuverlässige Verbindung zweier Installationsschaltgeräte zu schaffen.

Die Aufgabe wird erfindungsgemäß gelöst durch ein Verbindungselement mit den kennzeichnenden Merkmalen des Anspruchs 1. Hinsichtlich einer erfindungsgemäßen Verbindung wird die Aufgabe gelöst durch die kennzeichnenden Merkmale des Anspruchs 14.

Erfindungsgemäß also ist wenigstens an einem ersten oder zweiten Spreizarm je ein Distanzstück angebracht, derart, dass die Höhe des Distanzstücks den minimalen Abstand festlegt, auf den die ersten und zweiten Spreizarme gegeneinander gedrückt werden können.

In einer besonders vorteilhaften Ausgestaltungsform ist an jeweils einem ersten und zweiten Spreizarm je ein erstes und zweites Distanzstück angebracht. Die ersten und zweiten Distanzstücke können vorteilhafterweise seitlich gegeneinander versetzt sein und die gleiche Höhe haben, so dass beim Zusammendrücken der ersten und zweiten Spreizarme die beiden Distanzstücke aneinander vorbei gleiten. Insbesondere können die ersten und zweiten Distanzstücke eine trapezförmige Querschnittskontur aufweisen und spiegelbildlich gegenüber angeordnet sein.

Die Distanzstücke können gemäß einer anderen sehr vorteilhaften Ausgestaltung der Erfindung aus dem gleichen Material bestehen wie die Spreizarme. Dieses Material kann vorteilhafterweise Kunststoff sein. Das Verbindungselement kann dann beispielsweise zusammen mit den Distanzstücken in einem Spritzgussvorgang hergestellt werden. Dadurch ist eine sehr kostengünstige Fertigungsmöglichkeit der Verbindungselemente gegeben.

Der Vorteil eines erfindungsgemäßen Verbindungselementes liegt darin, dass eine große Variationsbreite für die Steifigkeit der Spreizarme zulässig ist. Bei der Spreizverbindung gemäß der EP 1 109 277 A2 ist es erforderlich, dass die Spreizarme eine bestimmte, relativ große Steifigkeit aufweisen. Das beschränkt die Auswahlmöglichkeit des Materials und die konstruktive Gestaltungsmöglichkeit.

Die erfindungsgemäß angebrachten Distanzstücke verhindern, dass bei relativ weichen Spreizarmen die freien Enden der Spreizarme zu weit aufeinander zu gedrückt werden können. Weiterhin wird durch die Distanzstücke verhindert, dass die Spreizarme so weit verbogen werden, dass sie an der Befestigungsstelle mit dem zylindrischen Grundkörper durch Materialermüdung abbrechen. Somit wird insgesamt die Zuverlässigkeit und Handhabbarkeit der Spreizverbindung erhöht und ihre Kosten gesenkt.

Weiterhin vorteilhaft ist eine Ausgestaltungsmöglichkeit des Verbindungselementes, bei dem die Spreizarme im montierten Zustand an ihrem freien Ende mit einem Spezialwerkzeug aufeinander drückbar sind. Dann nämlich können zum Lösen der Verbindung die Spreizarme von der dem Verbindungselement gegenüberliegenden Seite des Installationsschaltgerätes her durch die Öffnung, in die das Verbindungselement eingerastet wurde, mit dem Spezialwerkzeug zusammengedrückt werden, so dass die radial vorspringenden Nasen des Verbindungselementes von den Rücksprüngen entrasten und das Verbindungselement aus dem Durchgangsloch einfach herausgezogen werden kann.

Damit Toleranzen in den Gehäusen ausgeglichen werden, ist die Übergangsfläche des Grundkörpers zu den Spreizarmen und die Übergangsfläche von den Spreizarmen zu den Nasen jeweils konisch ausgebildet. Dadurch wird erreicht, dass auch bei ungünstiger Toleranzlage der Rücksprung an den Nasen anliegt.

Weitere vorteilhafte Ausgestaltungen und Verbesserungen der Erfindung sind den weiteren Unteransprüchen zu entnehmen.

Anhand der Zeichnungen, in denen drei Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1: eine Teilschnittansicht zweier Installationsschaltgeräte mit einem Verbindungselement, wobei nur der dem Verbindungselement benachbarte Bereich dargestellt ist,
- Fig. 2: eine Längsschnittansicht durch das erfindungsgemäße Verbindungselement,
- Fig. 3: eine Aufsicht auf das freie Ende der Spreizarme des Verbindungselementes nach Fig. 2, in entspanntem Zustand,
- Fig. 4: eine Aufsicht auf das freie Ende der Spreizarme des Verbindungselementes nach Fig. 2, im maximal zusammengedrücktem Zustand,
- Fig. 5: eine Aufsicht auf das freie Ende der Spreizarme einer weiteren Ausführungsform eines erfindungsgemäßen Spreizelementes, links in entspanntem Zustand, rechts in zusammengedrücktem Zustand, und
- Fig. 6: eine isometrische Darstellung eines erfindungsgemäßen Verbindungselementes

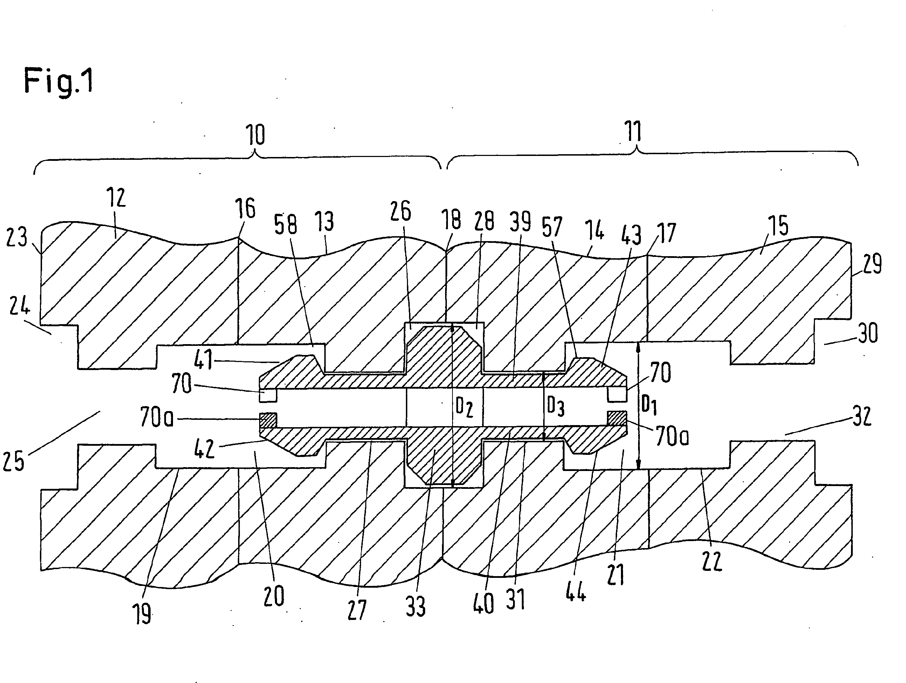

Fig. 1 zeigt in einer Schnittansicht den der Verbindungsstelle benachbarten Bereich zweier nebeneinander angeordneter Installationsschaltgerätegehäuse 10 und 11. Jedes Gehäuse 10, 11 ist aus schalenförmigen Gehäuseteilen 12, 13 sowie 14, 15 zusammengesetzt, wobei die Teilungsfuge zwischen den Gehäuseteilen 12 und 13 die Bezugsziffer 16 und die Teilungsfuge zwischen den Gehäuseteilen 14 und 15 die Bezugsziffer 17 trägt. Die Berührungsfläche der beiden Gehäuse 10, 11 ist mit 18 bezeichnet und entspricht je einer Breitseite der beiden Gehäuse 10, 11.

Ausgehend von den Trennfugen 16, 17 besitzt jedes Gehäuseteil eine zylindrische erste Vertiefung 19, 20 beziehungsweise 21, 22, die im zusammengebauten Zustand, wenn die beiden Gehäuseteile 12, 13 bzw. 14, 15 aneinandergesetzt sind, miteinander einen zylindrischen Innenraum bilden. An der Breitseite 23 des Gehäuseteiles 12 befindet sich eine Vertiefung 24, die mit der Vertiefung 19 durch ein Durchgangsloch 25 verbunden ist. In ähnlicher Weise besitzt die Breitseite des Gehäuseteiles 13, die die Berührungsfläche 18 bildet, eine in diese Fläche einmündende Vertiefung 26, die mit der Vertiefung 20 durch ein Durchgangsloch 27 verbunden ist.

An der Breitseite 29 des Gehäuseteiles 15 befindet sich eine Vertiefung 30, die mit der Vertiefung 22 durch ein Durchgangsloch 32 verbunden ist. In ähnlicher Weise besitzt die Breitseite des Gehäuseteiles 14, die ebenfalls die Berührungsfläche 18 bildet, eine in diese Fläche einmündende Vertiefung 28, die mit der Vertiefung 21 durch ein Durchgangsloch 31 verbunden ist.

Die Vertiefungen 19, 20, 21 und 22, 24 und 30 ebenso wie die Durchgangslöcher 25, 27, 31, 32 fluchten miteinander.

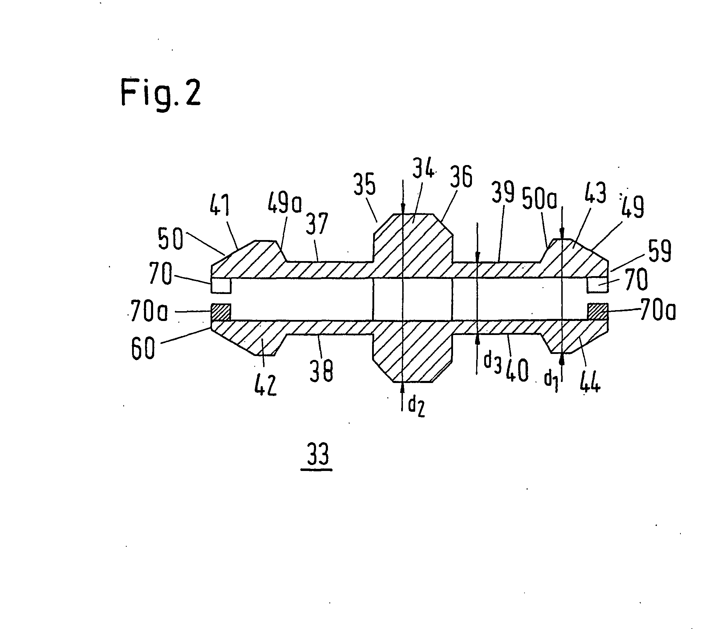

In die Vertiefungen bzw. Durchgangslöcher ist ein Verbindungselement 33 eingesetzt, das in der Fig. 2 im Schnitt dargestellt ist.

Der Innendurchmesser der Durchgangslöcher 25, 27, 31, 32 ist mit D3 bezeichnet. Der Innendurchmesser der ersten Vertiefungen 21, 22, 19, 20 ist mit D1 bezeichnet. Der Innendurchmesser der zweiten Vertiefungen 28, 26, 24, 30 ist mit D2 bezeichnet.

Das Verbindungselement 33 besitzt einen mittig liegenden zylindrischen Grundkörper 34, von dessen Stirnseiten 35 und 36 in axialer Richtung vorspringende federnde Spreizarme 37, 38 und 39, 40 paarweise angebracht sind.

Die außen liegenden Teile der Stirnseiten 35 und 36 des Grundkörpers 34 bilden eine Konusform, deren offene Seiten gegeneinander gerichtet sind. Der Konuswinkel beträgt dabei geringfügig weniger als 180°. Es ist ein sehr stumpfer Konuswinkel.

Der Außendurchmesser des Grundkörpers 34 ist mit d2 bezeichnet. Er ist so gewählt, dass er in die Vertiefungen 26, 28, 30, 24 hineinpasst. Die die Spreizarme 37, 38 bzw. 39, 40 umhüllenden Zylinderflächen besitzen einen Außendurchmesser d3, der mit dem Innendurchmesser der Durchgangslöcher 25, 27, 31, 32 korrespondiert. An den Spreizarmen 37, 38 bzw. 39, 40 sind jeweils Nasen 41, 42, 43, 44 angeformt, die radial in entgegengesetzte Richtung vorspringen und auf diametral sich gegenüberliegenden Mantellinien oder Mantelflächen liegen.

Die Nasen 41, 42, 43, 44 weisen äußere Nasenflächen 49, 50 auf, die eine Kegelform oder Kegelstumpfform bilden, wobei sich die Kegelstümpfe zu den freien Enden 59, 60 der Spreizarme 37, 38, 39, 40 hin verjüngen.

Die Nasen 41, 42, 43, 44 besitzen auf ihren den Stirnflächen 35, 36 gegenüberliegenden inneren Nasenflächen 49a, 50a, ebenfalls eine Konusform, die zum freien Ende hin offen ist und ebenfalls einen ähnlichen Öffnungswinkel besitzt wie die Stirnflächen 35 und 36.

Die Konusflächen 35, 36, 49a, 50a, 49, 50 dienen dazu, Toleranzen der Längserstreckung der Bohrungen 25, 27, 31, 32, sowie Toleranzen in den Durchmessern auszugleichen und ein automatisiertes Einsetzen der Verbindungselemente in die Öffnungen zu erleichtern.

An den freien Enden 59 der beiden Spreizarme 39, 40 sind zwischen diesen und aufeinander zuweisend ein erstes und ein zweites Distanzstück 70, 70a angebracht. Das erste Distanzstück 70 ist an dem Spreizarm 39, und das zweite Distanzstück 70a ist an dem Spreizarm 40 angebracht. Die beiden Distanzstücke 70, 70a haben jedes eine trapezförmige Querschnittskontur und sind spiegelbildlich gegenüber angeordnet.

Beide Distanzstücke 70, 70a bestehen aus dem gleichen Material wie die Spreizarme 39, 40, einem Kunststoff, und sind zusammen mit den Spreizarmen in einem Spritzgussverfahren hergestellt.

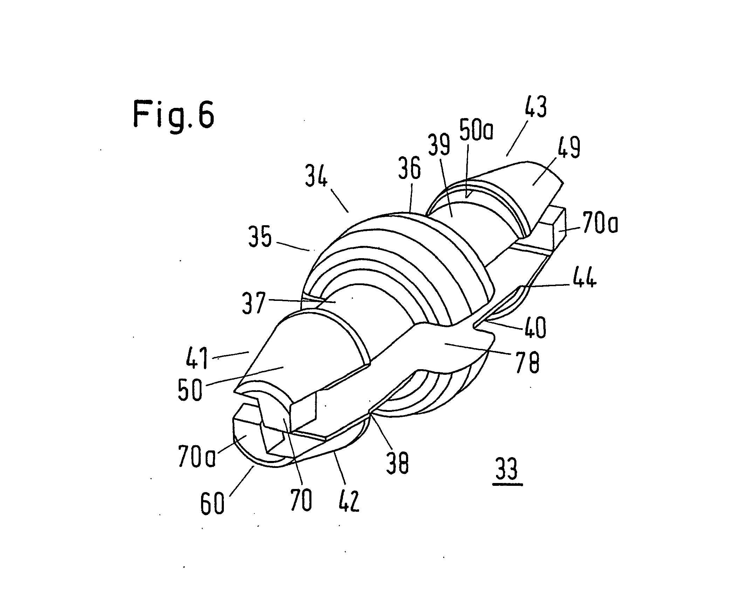

Fig. 6 zeigt in isometrischer Darstellung ein erfindungsgemäßes Verbindungselement 33, wie es in Fig. 2 im Längsschnitt dargestellt ist. Gleiche Elemente oder Teile wie bereits in Fig. 1 oder 2 beschrieben tragen die gleichen Bezugsziffern. Der Verbindungskörper 33 weist einen axial verlaufenden Längsschlitz 78 auf. Dadurch ist auch der Grundkörper 34 beim Einsetzen des Verbindungselementes 33 in die entsprechenden Vertiefungen radial federnd zusammendrückbar, was die Konturanpassungsfähigkeit des Verbindungselementes 33 weiter erhöht.

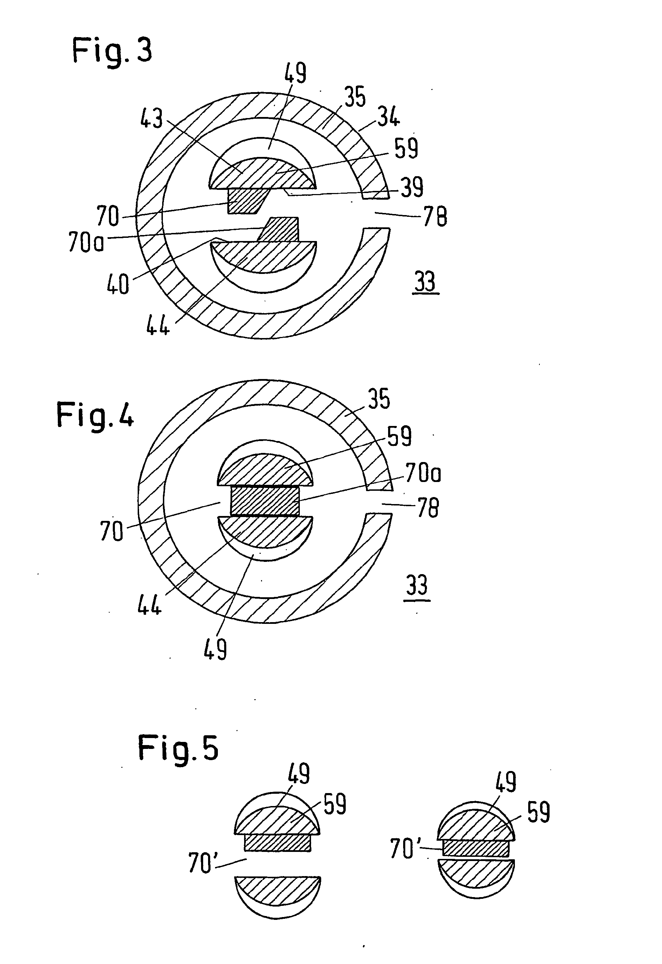

Fig. 3 zeigt eine Aufsicht auf die freien Enden 59, 60 des Verbindungselementes 33, in entspanntem Zustand. Gleiche Bauelemente oder Teile wie bereits in Fig. 1, 2 oder 6 beschrieben, tragen in Fig. 3 die gleichen Bezugsziffern. Die die Nasenfläche 49 der radial vorspringenden Nasen 43 und 44 umhüllende Fläche hat einen ovalen Querschnitt.

Fig. 4 zeigt das Verbindungselement 33 mit dem Spreizelement 70 nach Fig. 3, wobei in der Fig. 4 aber die freien Enden der Spreizarme 39 und 40 zusammengedrückt sind. Diese zusammengedrückte Position gemäß Fig. 4 entspricht der Lage, in der das Verbindungselement 33 durch das Durchgangsloch 31 in der Gehäusehälfte 14 des Installationsgerätes 11 (siehe Fig. 1) hindurchgeführt wird. Im zusammengedrückten Zustand der Fig. 4 liegt die die vorspringenden Nasen 43, 44 umhüllende Fläche auf einer Mantelfläche mit kreisförmigem Querschnitt, so dass die vorspringenden Nasen 43, 44 somit leicht durch das Durchgangsloch 31 mit ebenfalls kreisförmigem Querschnitt hindurchgeführt werden können.

Die Distanzstücke 70, 70a gleiten beim Zusammendrücken der Spreizarme 39, 40 aneinander vorbei. Die beiden Spreizarme lassen sich nur soweit zusammendrücken, wie die Höhe der Distanzstücke es zulässt. Je nach Abmessungen gleiten die benachbaten Schrägflächen der Distanzstücke 70, 70 a aufeinander auf.

Wie in Fig. 1 ersichtlich, liegen nach Durchführen der vorspringenden Nasen 43, 44 durch das Durchgangsloch 31 und Einrasten der inneren Nasenfläche 50a, auch Rastfläche genannt, hinter dem Rücksprung 57, die Spreizarme 39 und 40 flächig an der Innenkontur des Durchgangslochs 31 an. Der Außendurchmesser der die Spreizarme 39, 40 umhüllenden Zylinderfläche ist in etwa gleich dem Innendurchmesser des Durchgangslochs 31.

Zur Montage werden also zunächst die beiden Gehäuseteile 14 und 15 bzw. 12 und 13 zusammengesetzt zu jeweils einem Installationsgerät 11, bzw. 10. Danach wird das Verbindungselement mit den Spreizarmen 39, 40 durch das Durchgangsloch 31 hindurch gesteckt. Sobald sie durch das Durchgangsloch 31 durchgeglitten sind, hintergreifen sie mit der Rastfläche 50a den an die Durchgangsöffnung anschließenden Rücksprung 57.

Zur Befestigung des anderen Installationsgerätes 10 wird dieses mit dem Durchgangsloch 27 über die Nasen 41, 42 gesteckt, so lange, bis die Nasen 41, 42 mit ihrer Rastfläche 49a den Rücksprung 58 des Durchgangsloches 27 hintergreifen.

In der Fig. 1 ist lediglich ein Verbindungselement dargestellt. Zur Verbindung zweier nebeneinanderliegender Installationsgeräte, beispielsweise zweier Leitungsschutzschalter zu einem zweipoligen Leitungsschutzschalter, wären dann mehr als eine, typischerweise 3 oder 4 Verbindungselemente erforderlich.

Aus dem zweipoligen Leitungsschutzschalter mit den beiden Polen 10, 11, könnte auch ein dreipoliger hergestellt werden. Zu diesem Zweck wird ein weiteres Verbindungselement 33a (hier nicht dargestellt, aber genauso aufgebaut wie das Verbindungselement 33, gleiche Teile sind mit den gleichen Bezugsziffern, ergänzt um den Buchstaben a, bezeichnet) mit den Spreizarmen 37a, 38a durch die Öffnung 32 hindurchgesteckt, bis die Nasen 41a, 42a in der Vertiefung 22 einrasten. Sodann wird ein weiteres Schaltgerät über die Rastarme 39a und 40a gerastet.

Wenn die Verbindung der beiden Schaltgeräte 11 und 10 durch Verbindungselemente wie in Fig. 1 gezeigt wieder gelöst werden soll, so kann das folgendermaßen geschehen. Durch die Öffnung 32 steckt man ein Spezialwerkzeug hindurch und drückt damit die beiden freien Enden der Spreizarme 39, 40 des Verbindungselementes 33 soweit zusammen, bis die vorspringenden Nasen 43, 44 wieder von dem Rücksprung 57 entrasten. Somit kann das Verbindungselement durch das Durchgangsloch 31 herausgleiten.

Fig. 5 zeigt schematisch eine weitere Ausführungsmöglichkeit für ein Distanzstück 70'. Fig. 5 zeigt eine Aufsicht auf die freien Enden der Spreizarme eines erfindungsgemäßen Verbindungselementes, wobei die gezeigten Bauteile die gleichen Bezugsziffern tragen wie in den vorhergehenden Figuren, ergänzt um einen Apostroph. Es ist hier nur ein Distanzstück 70' an einem der beiden sich einander gegenüberliegenden Spreizarme angebracht. Der linke Bildteil von Fig. 5 zeigt den entspannten Zustand, der rechte Teil der Fig. 5 zeigt den zusammengedrückten Zustand.

Selbstverständlich sind auch noch andere Formen zur konkreten Ausgestaltung und Anordnung eines oder mehrerer Distanzstücke zur Realisierung eines erfindungsgemäßen Verbindungselementes denkbar. Diese sollen alle in der Erfindung umfasst sein. Es kann aus konstruktiven Gründen auch erforderlich sein, das oder die Distanzstücke nicht am freien Ende der Spreizarme, sondern an anderer Stelle anzubringen. Damit wäre der wesentliche Erfindungsgedanke der vorliegenden Erfindung auch mit solchen an anderer Stelle zwischen den beiden Spreizarmen angebrachten Distanzstücke realisiert.

## Patentansprüche

1. Verbindungselement-für zwei nebeneinander angereihte, mit ihren Breitseiten aneinanderliegende Installationsschaltgeräte, insbesondere Leitungsschutzschalter oder Fehlerstromschutzschalter, deren Gehäuse aus je zwei schalenartigen Gehäuseteilen gebildet sind, wobei das Verbindungselement einen etwa zylinderförmigen Grundkörper (34) mit einem ersten Außendurchmesser (d2) aufweist, an dessen Stirnseiten (35, 36) jeweils je zwei radial auffedernde, axial vorspringende, erste (37,39) und zweite (38, 40) Spreizarme angeformt sind, deren Außenkonturen auf einer zylindrischen Mantelfläche liegen, deren Außendurchmesser (d3) kleiner ist als der erste Außendurchmesser des Grundkörpers (34), und deren freie Enden auf entgegengesetzt liegenden Mantellinien radial vorspringende Nasen (41, 42, 43, 44) aufweisen, die im montierten Zustand hinter Rücksprüngen (58, 57) an den mit dem Verbindungselement zu verbindenden Gehäusen der nebeneinanderliegenden Installationsschaltgeräte (10, 11) einrasten, **dadurch gekennzeichnet, dass** wenigstens an einem ersten (37, 39) oder zweiten (38, 40) Spreizarm je ein Distanzstück (70) angebracht ist, derart, dass die Höhe des Distanzstücks (70) den minimalen Abstand festlegt, auf den die ersten (37, 39) und zweiten (38, 40) Spreizarme gegeneinander gedrückt werden können.

2. Verbindungselement nach Anspruch 1, **dadurch gekennzeichnet, dass** an jeweils einem ersten (37, 39) und zweiten (38, 40) Spreizarm je ein erstes und zweites Distanzstück (70, 70a) angebracht ist.

3. Verbindungselement nach Anspruch 2, **dadurch gekennzeichnet, dass** die ersten und zweiten Distanzstücke (70, 70a) seitlich gegeneinander versetzt sind und die gleiche Höhe haben, so dass beim Zusammendrücken der ersten (37, 39) und zweiten (38, 40) Spreizarme die beiden Distanzstücke (70, 70a) aneinander vorbei gleiten.

4. Verbindungselement nach Anspruch 3, **dadurch gekennzeichnet, dass** die ersten und zweiten Distanzstücke (70, 70a) eine trapezförmige Querschnittskontur aufweisen und spiegelbildlich gegenüber angeordnet sind.

5. Verbindungselement nach einem der vorigen Ansprüche, **dadurch gekennzeichnet, dass** die Distanzstücke (70, 70a) aus dem gleichen Material bestehen wie die Spreizarme (37, 38, 39, 40).

6. Ein in Spritzgusstechnik gefertigtes Verbindungselement nach einem der vorigen Ansprüche.

7. Verbindungselement nach Anspruch 6, **dadurch gekennzeichnet, dass** das Verbindungselement mit dem Spreizelement (70) zusammen in einem Spritzgussvorgang gefertigt ist.

8. Ein aus Kunststoff gefertigtes Verbindungselement nach einem der vorigen Ansprüche.

9. Verbindungselement nach einem der vorigen Ansprüche, **dadurch gekennzeichnet, dass** die Spreizarme (37, 38, 39, 40) in montiertem Zustand an ihrem freien Ende (59, 60) mit einem Spezialwerkzeug aufeinander drückbar sind.

10. Verbindungselement nach einem der vorigen Ansprüche, **dadurch gekennzeichnet, dass** die freien Enden der Nasen (41, 42, 43, 44) konisch zugespitzt sind.

11. Verbindungselement nach einem der vorigen Ansprüche, **dadurch gekennzeichnet, dass** die Stirnflächen (35, 36) des Grundkörpers (34) stumpf konisch ausgebildet sind, wobei die Konuswinkel gegeneinander geöffnet sind.

12. Verbindungselement nach einem der vorigen Ansprüche, **dadurch gekennzeichnet, dass** die den Stirnflächen (35, 36) gegenüberliegenden Nasenflächen (49, 50) eine Konusform aufweisen, deren Konuswinkel in entgegengesetzter Richtung offen ist.

13. Verbindungselement nach Anspruch 11 und/oder 12, **dadurch gekennzeichnet, dass** der Konus-Basisdurchmesser (d1) größer ist als der Außendurchmesser (d2) der zylindrischen Mantelfläche, und kleiner als der erste Außendurchmesser (d1) des zylindrischen Grundkörpers (34).

14. Verbindung von Installationsschaltgeräten, deren Gehäuse aus je zwei schalenartigen Gehäuseteilen gebildet sind, mit einem Verbindungselement gemäß einem der Ansprüche 1 bis 13, wobei jedes Gehäuseteil, ausgehend von einer Trennfuge (16, 17) zwischen zwei Gehäuseteilen (12, 13, 14, 15) eine zylindrische, erste Vertiefung (18, 19, 20, 21) mit einem ersten, mit dem Konus-Basisdurchmesser (d1) des Verbindungselements korrespondierenden Innendurchmesser (D1), und ausgehend von der Gehäusebreitseite (18) eine zylindrische, zweite Vertiefung (24, 26, 28, 30) mit einem zweiten, mit dem Außendurchmesser (d2) des zylindrischen Grundkörpers (34) korrespondierenden Innendurchmesser (D2) besitzt, die durch ein zylindrisches Durchgangsloch (27, 31) miteinander verbunden sind, aufweist, **dadurch gekennzeichnet, dass** das Verbindungselement mit seinen Nasenflächen (49, 50) die am Übergang der ersten zylindrischen Vertiefungen (20, 21) den zu verbindenden Gehäuseteilen (13, 14) der Installationsschaltgeräte (10, 11) auf die zylindrischen Durchgangslöcher (27, 31) entstehenden Rücksprünge (57, 58) hintergreift.

15. Verbindung nach Anspruch 14, **dadurch gekennzeichnet, dass** die Außenkonturen der radial vorspringenden Nasen (41, 42, 43, 44) des Verbindungselementes im nicht eingebauten Zustand auf einer Mantelfläche mit ovalen Querschnitten , und im Montagevorgang auf einer Mantelfläche mit kreisförmigen Querschnitten liegen.

## Claims

1. A connector element for two installation breakers, especially miniature circuit breakers or residual-current circuit breakers, adjacently attached with the broad faces thereof in contact, the housings of which are each formed from two dished housing pieces, with the connector element comprising an approximately cylindrical base body (34) with a first external diameter (d2), on the front sides (35, 36) of which two radially-sprung, axially projecting first (37, 39) and second (38, 40) expanding arms are moulded, with the external contours of the spreader arms lying on a cylindrical jacket surface, the external diameter (d3) of which is smaller than the first external diameter of the base body (34), and the free ends thereof comprising radially projecting lugs (41, 42, 43, 44) on opposed jacket lines, which, in the assembled state, clip behind recesses (58, 57) on the housings, for connection by means of the connector element, of adjacent installation breakers (10, 11), **characterized in that** a spacer piece (70) each is mounted on at least one first (37, 39) or second (38, 40) expanding arm, such that the height of the spacer piece (70) determines the minimum distance to which the first (37, 39) and second (38, 40) expanding arms can be pressed together.

2. A connector element according to claim 1, **characterized in that** a first and second spacer piece (70, 70a) each are attached to a first (37, 39) and second (38, 40) expanding arm.

3. A connector element according to claim 2, **characterized in that** the first and second spacer pieces (70, 70a) are laterally offset against one another and have the same height, so that when the first (37, 39) and the second (38, 40) expanding arms are compressed the two spacer pieces (70, 70a) slide past one another.

4. A connector element according to claim 3, **characterized in that** the first and second spacer pieces (70, 70a) have a trapezoid cross-sectional shape and are arranged in a mirror-like manner opposite of each other.

5. A connector element according to one of the preceding claims, **characterized in that** the spacer pieces (70, 70a) consist of the same material as the expanding arms (37, 38, 39, 40).

6. A connector element according to one of the preceding claims which is produced by means of injection molding.

7. A connector element according to claim 6, **characterized in that** the connector element is produced together with the expanding element (70) in one injection-molding process.

8. A connector element according to one of the preceding claims which is made from plastic.

9. A connector element according to one of the preceding claims, **characterized in that** in the mounted state the expanding arms (37, 38, 39, 40) can be pressed on each other at their free end (59, 60) with a special tool.

10. A connector element according to one of the preceding claims, **characterized in that** the free ends of the lugs (41, 42, 43, 44) are conically tapered to a point.

11. A connector element according to one of the preceding claims, **characterized in that** the front sides (35, 36) of the base body (34) are provided in an obtuse conical way, with the cone angles being opened against each other.

12. A connector element according to one of the preceding claims, **characterized in that** the front sides (35, 36) of opposite lug surfaces (49, 50) have a conical shape whose cone angle is open in the opposite direction.

13. A connector element according to claim 11 and/or 12, **characterized in that** the basic diameter (d1) of the cone is larger than the external diameter (d2) of the cylindrical jacket surface and smaller than the first external diameter (d1) of the cylindrical base body (34).

14. A connection of installation breakers whose housing is formed from two dished housing parts, comprising a connector element according to one of the claims 1 to 13, with each housing part, starting out from a separating gap (16, 17) between two housing parts (12, 13, 14, 15), having a cylindrical first recess (18, 19, 20, 21) with a first inside diameter (D1) corresponding to the basic cone diameter (d1) of the connector element, and, starting out from the broad side (18) of the housing, having a cylindrical second recess (24, 26, 28, 30) with a second inside diameter (D2) corresponding to the external diameter (d2) of the cylindrical base body (34) which are connected with each other by a cylindrical pass-through hole (27, 31), **characterized in that** the connector element grasps with its lug surfaces (49, 50) behind the recesses (57, 58) which originate at the transition point of the first cylindrical recesses (20, 21) of the housing parts (13, 14) of the installation breakers (10, 11) to the cylindrical pass-through holes (27, 31).

15. A connection according to claim 14, **characterized in that** the outer shape of the radially protruding lugs (41, 42, 43, 44) of the connector element rest in the non-mounted state on a jacket surface with oval cross sections and in the mounting process on a jacket surface with circular cross sections.

## Revendications

1. Élément de liaison pour deux appareils de commutation d'installation ou disjoncteurs de protection de ligne alignés l'un à côté de l'autre et reposant l'un contre l'autre par leurs côtés larges, dont les boîtiers sont formés de deux parties de boîtier en forme de coques, lequel élément de liaison possède un corps (34) approximativement cylindrique avec un premier diamètre extérieur (d2) dont les faces d'extrémité (35, 36) portent chacune un premier (37, 39) et un deuxième (38, 40) bras écartés élastiques dans le sens radial et faisant saillie dans le sens axial, dont les contours extérieurs s'inscrivent sur une surface d'enveloppe cylindrique, dont le diamètre extérieur (d3) est plus petit que le premier diamètre extérieur du corps (34), et dont les extrémités libres présentent des ergots (41, 42, 43, 44) faisant saillie dans le sens radial vers des lignes d'enveloppe opposées, qui s'engagent dans l'état monté derrière des saillies (58, 57) sur les boîtiers à assembler avec l'élément de liaison des appareils de commutation d'installation (10, 11) juxtaposés, **caractérisé en ce qu'**un élément d'espacement (70) est disposé sur au moins un premier (37, 39) ou un deuxième (38, 40) bras écarté, de telle sorte que la hauteur de l'élément d'espacement (70) détermine la distance minimale à laquelle les premier (37, 39) et deuxième (38, 40) bras écartés peuvent être pressés l'un vers l'autre.

2. Élément de liaison selon la revendication 1, **caractérisé en ce qu'**un premier élément d'espacement et un deuxième (70, 70a) sont respectivement disposés sur un premier (37, 39) et un deuxième (38, 40) bras écarté.

3. Élément de liaison selon la revendication 2, **caractérisé en ce que** les premier et deuxième éléments d'espacement (70, 70a) sont décalés latéralement l'un par rapport à l'autre et ont la même hauteur, de sorte que lorsque les premier (37, 39) et deuxième (38, 40) bras écartés sont compressés, les deux éléments d'espacement (70, 70a) glissent l'un devant l'autre.

4. Élément de liaison selon la revendication 3, **caractérisé en ce que** les premier et deuxième éléments d'espacement (70, 70a) présentent un contour en section trapézoïdal et sont disposés de manière symétrique l'un par rapport à l'autre.

5. Élément de liaison selon l'une des revendications précédentes, **caractérisé en ce que** les éléments d'espacement (70, 70a) sont faits du même matériau que les bras écartés (37, 38, 39,40).

6. Élément de liaison fabriqué par moulage par injection selon l'une des revendications précédentes.

7. Élément de liaison selon la revendication 6, **caractérisé en ce que** l'élément de liaison est fabriqué en même temps que l'élément d'espacement (70) pendant une opération de moulage par injection.

8. Élément de liaison fabriqué en matière plastique selon l'une des revendications précédentes.

9. Élément de liaison selon l'une des revendications précédentes, **caractérisé en ce que** les bras écartés (37, 38, 39, 40) peuvent, dans l'état monté, être pressés les uns vers les autres à leur extrémité libre (59, 60) à l'aide d'un outil spécial.

10. Élément de liaison selon l'une des revendications précédentes, **caractérisé en ce que** les extrémités libres des ergots (41, 42, 43, 44) se terminent en pointe conique.

11. Élément de liaison selon l'une des revendications précédentes, **caractérisé en ce que** les faces d'extrémité (35, 36) du corps (34) sont de forme tronconique, les angles de cône étant ouverts l'un vers l'autre.

12. Élément de liaison selon l'une des revendications précédentes, **caractérisé en ce que** les surfaces des ergots (49, 50) faisant face aux surfaces d'extrémité (35, 36) ont une forme conique dont l'angle de cône est ouvert dans la direction opposée.

13. Élément de liaison selon la revendication 11 et/ou 12, **caractérisé en ce que** le diamètre de base du cône (d1) est plus grand que le diamètre extérieur (d2) de la surface d'enveloppe cylindrique et plus petit que le premier diamètre extérieur (d1) du corps cylindrique (34).

14. Assemblage d'appareils de commutation d'installation dont les boîtiers sont formés de deux parties de boîtier en forme de coques avec un élément de liaison selon l'une des revendications 1 à 13, dans lequel chaque partie de boîtier présente, à partir d'un joint de séparation (16, 17) entre deux parties de boîtier (12, 13, 14, 15), un premier renfoncement cylindrique (18, 19, 20, 21) avec un premier diamètre intérieur (D1) correspondant au diamètre de base du cône (d1) de l'élément de liaison, et à partir du côté large du boîtier (18) un deuxième renfoncement cylindrique (24, 26, 28, 30) avec un deuxième diamètre intérieur (D2) correspondant au diamètre extérieur (d2) du corps cylindrique (34), qui sont reliés entre eux par un trou de passage cylindrique (27, 31), **caractérisé en ce que** l'élément de liaison passe, avec ses surfaces d'ergot (49, 50), derrière les saillies (57, 58) créées à la transition entre le premier renfoncement cylindrique (20, 21) dans les parties de boîtier (13, 14) à assembler des appareils de commutation d'installation (10, 11) vers les trous de passage (27, 31) cylindriques.

15. Assemblage selon la revendication 14, **caractérisé en ce que** les contours extérieurs des ergots (41, 42, 43, 44) en saillie dans le sens radial de l'élément de liaison reposent, dans l'état non monté, sur une surface d'enveloppe de section ovale, et lors de l'opération de montage, sur une surface d'enveloppe de section circulaire.
